Europäisches Patentamt

European Patent Office

Office européen des brevets

(19)

(11) Veröffentlichungsnummer: **0 161 002**

**A2**

(12) ## EUROPÄISCHE PATENTANMELDUNG

(21) Anmeldenummer: 85105770.3

(22) Anmeldetag: 10.05.85

(51) Int. Cl.⁴: **E 04 H 9/14**

(30) Priorität: 11.05.84 DE 3417533

(43) Veröffentlichungstag der Anmeldung:
13.11.85 Patentblatt 85/46

(84) Benannte Vertragsstaaten:
AT BE CH DE FR GB IT LI LU NL SE

(71) Anmelder: Limpinsel, Heribert
Schöffenwiese 7
D-3538 Marsberg(DE)

(72) Erfinder: Limpinsel, Heribert
Schöffenwiese 7
D-3538 Marsberg(DE)

(74) Vertreter: Patentanwälte Zellentin
Zweibrückenstrasse 15
D-8000 München 2(DE)

(54) Vorrichtung zum Schutz von Objekten und Arealen sowie von Öffnungen in Wänden vor Hochwasser.

(57) Die Erfindung betrifft eine Vorrichtung (20) zum Schutz von Objekten und Arealen sowie von Öffnungen (11, 35) in Wänden vor Hochwasser. Die Vorrichtung ist dadurch gekennzeichnet, daß sie mindestens eine Matte (21;36;44,45;61;81) aus reißfestem elastischem Material aufweist, die mittels eines Rahmens (35) am Boden (12) bzw. direkt oder mittels eines Rahmens (35) an den eine Öffnung (11, 35) umgebenden Wänden (10) durch Befestigungsmittel (25,26;47,48;50,51) fest anordenbar ist. Vorzugsweise weist die Matte innen eingelagerte und/oder außen aufgebrachte. Verstärkungselemente auf und ist mindestens teilweise derart doppelwandig, daß mindestens ein aufblasbarer Hohlraum (29;41,42) besteht.

Fig 1

EP 0 161 002 A2

PATENTANWÄLTE ZELL 0161002

D-8000 München 2, Zweibrückenstraße 15, Telefon 089-22 45 85, Telex 5-22 903, Fax 089-22 20 66

10. Mai 1985

Eu 85 393 RZ/fr

Vorrichtung zum Schutz von Objekten und Arealen
sowie von Öffnungen in Wänden vor Hochwasser

Die Erfindung betrifft eine Vorrichtung zum Schutz von
Objekten und Arealen sowie von Öffnungen in Wänden vor
Hochwasser.

In bestimmten Gegenden, beispielsweise in den Rheinufer- und
Moseluferbereichen, treten regelmäßig Überschwemmungen durch
Hochwasser auf, bei denen der Wasserspiegel so hoch ansteigt, daß das Wasser in Gebäude eindringt und dort große
Schäden anrichtet. Hochwasserschutzdeiche, die in bestimmten
Bereichen der Rheinebene vorhanden sind, sind einerseits
sehr kosten- und raumaufwendig, andererseits z.B. an der
Mosel gar nicht zu erstellen, da hierzu der Platz fehlt.

Darüber hinaus sind Schutzvorrichtungen zum Schutz von
Gebäuden gegen des Eindringen von Wasser nicht bekannt. Bei
einer Gefahr von Hochwasser ist es üblich, Sandsackdämme
oder Abdichtungen vorzusehen, die aber eine absolute Wasserdichtigkeit nicht gewährleisten. Wenn Sandsäcke zum Schutz
von größeren Flächen verwendet werden, ist ein relativ
großer Aufwand zum Aufbau und zur Beseitigung erforderlich

0161002

und eine absolute Wasserundurchlässigkeit nicht gewährleistet.

Vorrichtungen zum Schutz von Gebäuden oder von Öffnungen in Gebäuden, die einen wirksamen Schutz gegen des Eindringen von Hochwasser bieten und die leicht und schnell zu montieren bzw. auf- und abzubauen sind, sind derzeit nicht bekannt.

Aufgabe der Erfindung ist es, eine Vorrichtung zum Schutz von Objekten und Arealen sowie von Öffnungen in Wänden vor Hochwasser anzugeben, mit der ein optimaler Schutz einzelner Gebäude, aber auch von größeren Arealen, vor Hochwasser oder eine wasserdichte Abdichtung von Fenster- und Türöffnungen in Gebäuden möglich ist und die einfach und schnell auf- und abbau- bzw. montierbar ist.

Diese Aufgabe wird durch eine Vorrichtung gelöst, die mindestens eine Matte aus reißfestem elastischem Material aufweist, die mittels eines Rahmens am Boden bzw. direkt oder mittels eines Rahmens an den, eine Öffnung umgebenden Wänden, gegebenenfalls auch am Boden durch Befestigungsmittel fest anordenbar ist.

Eine reißfeste elastische Matte kann dem Wasserdruck widerstehen und läßt sich leicht an den eine Öffnung umgebenen Wänden aufgrund ihrer Elastizität wasserdicht befestigen. Befestigt man die Matte im Rahmen, ist es auf einfache Art und Weise möglich, eine Schutzwand als linienförmiger Körper oder als "ringförmiger" Körper, der ein Einzelobjekt allseitig umgeben kann, herzustellen. Auch die im Rahmen gelagerten Matten erfordern wenig Platz bei der Lagerung in hochwasserarmen Zeiten und benötigen bei der Aufstellung ebenso wenig Platz. Vorzugsweise kann die Matte innen eingelegte und/oder äußere aufgebrachte Verstärkungselemente aufweisen. Hierdurch kann die Matte einmal bei gleichen Abmessungen einen höheren Druck aufnehmen und/oder, wenn die Verstärkungselemente im Randbereich die Befestigungspunkte angeordnet sind, z.B. gegen ein Einreißen oder Ausreißen bei punktförmiger Befestigung mittels Schraubverbindungen zu schützen.

Eine weitere vorzugsweise Ausgestaltung der Erfindung besteht darin, daß die Matte mindestens teilweise derart doppelwandig ist, daß mindestens ein aufblasbarer Hohlraum besteht.

Hierdurch besteht einerseits die Möglichkeit, daß bei einer Beschädigung der einen Matte die andere als Ersatzmatte zur Verfügung steht, zum anderen kann durch das Aufblasen des dazwischen liegenden Hohlraums eine bessere und sichere Abdichtung durch das bessere Anschmiegen der Mattenwandungen an die Unebenheiten der Öffnung gewährleistet werden, wenn die Hohlräume aufgeblasen werden. Hierdurch wird auch die Stabilität der Matte erhöht.

Eine weitere vorteilhafte Ausführung der Erfindung besteht darin, daß mindestens Teile des Rahmens in die Matte einvulkanisiert sind.

Hierdurch wird einerseits insbesondere der Mattenrand verstärkt, zum anderen kann durch die auf den Rahmenteilen aufliegenden elastischen Mattenteilen eine Abdichtung ohne zusätzliche Dichtungselemente auch bei Verwendung eines Rahmens erreicht werden.

Eine weitere vorteilhafte Ausgestaltung der Erfindung besteht darin, daß die Matte am Umfangsrand einen U-förmigen Streifen aufweist, dessen frei nach außen stehende parallele Schenkel einen Abstand voneinander aufweisen, der der Tiefe der zu verschließenden Öffnung bzw. der Stärke eines Rahmens entspricht und die die Begrenzungswände der Öffnung bzw. den Rahmen innen und außen umgreifen.

-4-

Hierdurch besteht die Möglichkeit, die Matte innen und außen an der Mauer bzw. am Rahmen zu befestigen, was nicht nur eine bessere Abdichtung, nämlich innen und außen, sondern auch eine bessere Verteilung der aufzunehmenden Kräfte gestattet.

Eine weitere vorteilhafte Ausgestaltung der Erfindung besteht darin, daß die äußeren, sich gegenüberliegenden Wände der einen Hohlraum bildenden Matten durch Verstärkungselemente miteinander verbunden sind.

Hierdurch kann, insbesondere wenn Druckluft in den Hohlraum eingeführt wird, neben einer Verstärkung der Matte der flache Charakter der Matte beibehalten werden.

Eine weitere vorteilhafte Ausgestaltung der Erfindung besteht darin, daß die Verstärkungselemente als Trennelemente zur Unterteilen des Hohlraums und/oder der Matte dienen.

Durch eine derartige Ausgestaltung kann gegebenenfalls entsprechend dem Anstieg des Hochwassers die Matte sukzessive erhöht werden.

Eine weitere vorteilhafte Ausgestaltung der Erfindung besteht darin, daß die Matte an einer Seitenkante mindestens eine, senkrecht zu ihrer Fläche vorspringende Querlasche aufweist.

Hierdurch besteht die Möglichkeit, die Matte, ohne sie zu knicken, an senkrecht zur Fläche der Matte sich erstreckenden Flächen, wie am Boden oder vorspringenden Fenstersimsen oder dergleichen, zu befestigen.

Vorzugsweise ist die Querlasche aus zwei, durch einen Schlitz getrennten, geringfügig gegeneinander bewegbaren Querlaschenteilen gebildet.

Hierdurch können Unebenheiten in der Befestigungsfläche auf einfache Weise ausgeglichen werden.

Eine andere vorzugsweise Ausgestaltung besteht darin, daß die Querlasche aus einer beidseitig vorspringenden, elastisch wirkenden separaten Bodenplatte besteht, die mittels auf ihr angeordneten L-förmigen Profilleisten dichtend mit der Matte verbindbar ist.

Diese Ausführung bringt dann Vorteile, wenn die Matte als Wand aufgestellt wird.

Weitere vorzugsweise Ausgestaltungen der Erfindung sind in den Ansprüchen 11 bis 13 niedergelegt.

Durch die erfindungsgemäße Vorrichtung können sowohl Fenster als auch Türen auf einfache Weise abgedichtet werden, indem die Matten nur außen, oder aber auch zusätzlich innen, z.B. mittels Schraubverbindungen, dichtend an der die Öffnung umgebenden Wand befestigt werden. Es besteht auch die Möglichkeit gemäß einer anderen Ausführung der Erfindung, die Tür- und Fensterflügel auszuhängen und die Matten mit dem U-Profil innen und außen zu befestigen. Durch die erfindungsgemäße Befestigung der Matte im Rahmen können leicht ganze Areale wirksam geschützt werden. Im Falle, daß die Matte aufblasbare Hohlräume enthält, können unter dem Einfluß der Druckluft sehr leicht Öffnungen wie Fenster-Türen- oder Kelleröffnungen praktisch vollständig wasserundurchlässig abgedichtet werden. Sobald eine Hochwasserwarnung durchgegeben wird, können mit der Vorrichtung auf einfache Weise alle Öffnungen verschlossen werden, insbesondere dann, wenn ein Teil der Befestigungselemente schon im Mauerwerk dauernd verankert ist. Der Auf- und Abbau der Vorrichtung ist einfach. Die Matten können platzsparend, gegebenenfalls zusammengerollt oder mittels der Rahmen gestapelt gelagert werden.

Als Material für die Matte kann ein elastischer Kunststoff oder ein gummiartiges Material, gegebenenfalls durch ein Gewebe verstärkt, verwendet werden. Vorteilhaft ist ein Material zu wählen, das die Möglichkeit zum Einvulkanisieren von Flach- bzw. Verstärkungsprofilen gestattet.

Bei der Ausführung der Vorrichtung in Form einer Schutzwand besteht nicht nur der Vorteil der optimalen Abdichtung gegen das Hochwasser, sondern auch der Vorteil, daß die Vorrichtung zum Aufstellen wenig Platz erfordert und nach einem Hochwasser leicht demontiert werden kann. Damit bleiben an Ort und Stelle keine, das Landschaftsbild beeinträchtigenden Bauwerke zurück. Eine noch schnellere Montage ist dann möglich, wenn im Boden ein Streifenfundament eingelassen ist, in dem Teile zur Befestigung des Rahmens mit der Bodenplatte vorgesehen sind.

Nachstehend werden Ausführungsbeispiele der Erfindung näher erläutert.

Zunächst wird ein Ausführungsbeispiel einfachster Art beschrieben (ohne Abbildung): Eine Matte zur wasserdichten Abdeckung einer Öffnung besteht aus einem reißfesten, flexiblen Material, z.B. mit einer Gewebeeinlage armiertem Gummi. Die Matte weist eine Größe auf, die allseitig die Öffnung, z.B. eine Fensteröffnung in einem Gebäude, überdeckt. Die Matte wird nun mittels geeigneter Befestigungsmittel an die Öffnung umgebenden Mauerwerk, oder gegebenenfalls am Fensterrahmen, falls dieser besonders verankert ist, derart befestigt, daß der Mattenrand unter Spannung gesetzt wird, so daß alle Ränder aufgrund ihrer Elastizität dicht auf der Befestigungsunterlage anliegen. Durch die Elastizität des Mattenmaterials werden Unebenheiten der Befestigungsfläche ausgeglichen. Um stärkeren Belastungen widerstehen zu können und um die notwendige Andruckkraft entlang des gesamten Umfangs anlegen zu können, ist eine Vielzahl von Befestigungspunkten erforderlich. Es ist aber auch möglich nur wenige "Anhaftpunkte" vorzusehen und die Spann- und Haltekraft z.B. durch außen aufgelegte Spanneisen aufzubringen. Die Zahl der Befestigungspunkte kann auch dann verringert werden, wenn Kraftübertragungselemente, z.B. Flachband- oder Winkelprofile verwendet werden, die vorzugsweise in die Matte integriert sind.

Um die Abdichtung der Matte, insbesondere bei stärkeren Unebenheiten der Auflagefläche zu erhöhen, kann ein- oder beidseitig der Befestigungslinie ein aufblasbarer Schlauch angeordnet oder mit der Matte fest verbunden sein. Da er keine wesentlichen Drücke aufnehmen muß, kann er sehr dünnwandig (Fahrradschlauch) ausgebildet sein, so daß sich seine Wandung auch an kleine Unebenheiten anpassen kann.

Die Montage wird erleichtert, wenn die Matte bereits in einem geschlossenen Rahmen befestigt ist und an den Befestigungsstellen dauerhafte Teile von Befestigungsmitteln wie z.B. Dübel, Anker, Muttern etc. befestigt sind, in die dann, z.B. Schrauben, die durch die Matte bzw. den Rahmen geführt sind, zur Befestigung der Matte bzw. des Rahmens einschraubbar sind.

Unter Rahmen wird hier nicht nur ein geschlossenes Vieleck, insbesondere ein Viereck verstanden, sondern auch jegliche Art von Verstärkungselementen wie Leisten (Flachbandprofile, Winkelprofile mit z.B. U-, V-, T-, 3-, C-förmigen Querschnitten), Seile, Spannseile, Lochscheiben und dergleichen mehr, die eine Verstärkung und/oder eine bessere und gegebenenfalls leichtere Befestigung an der jeweiligen Anordnungsstelle ermöglichen, wobei diese Teile miteinander fest oder beweglich verbunden oder auch im Abstand voneinander mit der Matte verbunden oder in sie eingeschlossen sind. Die Schenkelprofile können zum Andrücken der elastischen Matte an den Untergrund ausgerichtet sein.

Die Matten und Rahmen können derart standartisiert sein, daß sie eine Vielzahl üblicher Fenster- und Türöffnungen abzudecken erlauben.

Nachstehend werden weitere Ausführungsbeispiele der Erfindung unter Bezug auf Zeichnungen näher erläutert:

Es zeigt:

Fig. 1    einen Querschnitt durch eine, ein Fenster aufweisende Mauer, wobei das Fenster mit der erfindungsgemäßen Vorrichtung abgedichtet ist;

Fig. 2    eine Aufsicht auf die erfindungsgemäße Vorrichtung gemäß Fig. 1;

Fig. 3    eine der Fig. 1 ähnliche Schnittansicht durch eine Mauer im Bereich einer Tür;

Fig. 4    eine Aufsicht auf die erfindungsgemäße Vorrichtung gemäß Fig. 3;

Fig. 5    eine den Fig. 1 und 3 ähnliche Schnittansicht einer weiteren Ausführungsform der Erfindung;

Fig. 6    eine Schnittansicht gemäß Schnittlinie VI-VI;

Fig. 7    eine Aufsicht auf die erfindungsgemäße Vorrichtung gemäß Fig. 5 und 6;

Fig. 8    eine weitere erfindungsgemäße Vorrichtung in schematischer Darstellung;

Fig. 9    einen Rahmenteil für die Ausführung gemäß Fig. 8 von der Seite;

Fig. 10    den Rahmen gemäß Fig. 9, in Aufsicht;

Fig. 11 und 12    zwei Detailansichten zur Andeutung von Verbindungen und

Fig. 13    eine perspektivische Ansicht einer Rahmenkonstruktion gemäß Fig. 9, 10 und 11 für die Vorrichtung gemäß Fig. 8.

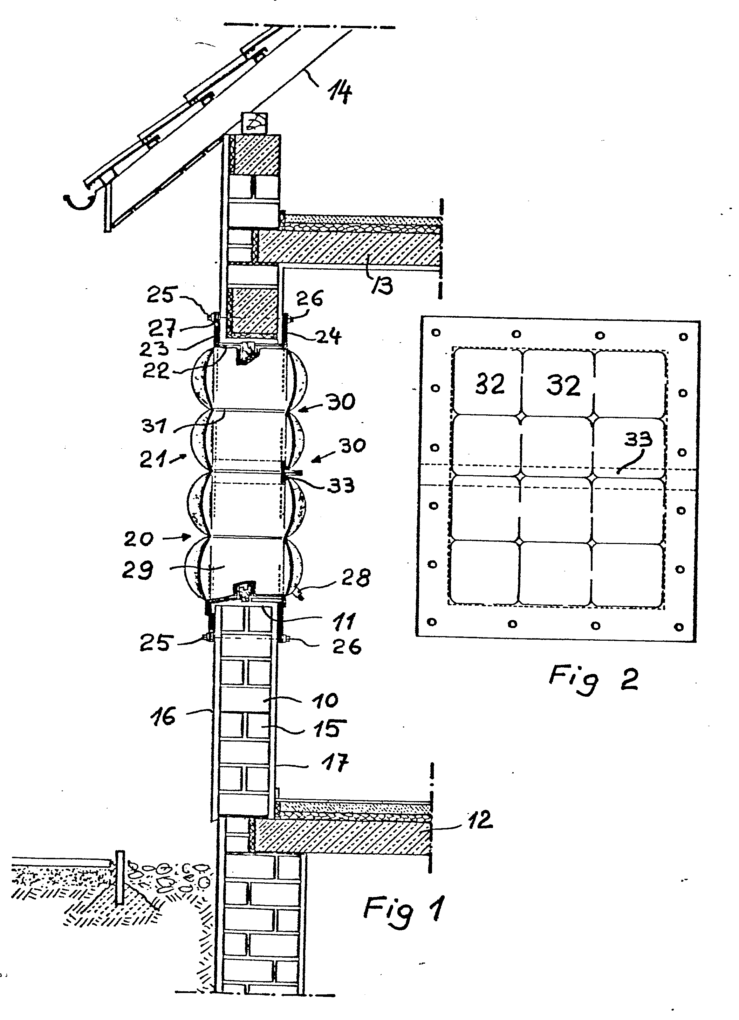

In Fig. 1 ist ein Querschnitt durch ein Mauerwerk 10 mit einer rechteckigen Fensteröffnung 11, mit einem Fußboden 12, einer Decke 13 und einem Dach 14 dargestellt. Die Mauer 10 ist in an sich bekannter Weise aus Mauersteinen 15 aufgebaut, an deren Außenflächen und Innenflächen je eine Putzschicht 16 bzw. 17 aufgebracht ist. Aus der Fensteröffnung 11 sind die Fensterflügel herausgenommen.

In die Fensteröffnung 11 ist eine erfindungsgemäße Vorrichtung 20 eingesetzt. Diese Vorrichtung 20 ist gebildet durch eine aufblasbare rechteckige Matte 21 aus dehnbaren, rißfestem elastischem Kunststoff, insbesondere aus gummiartigem Material, deren Außenumfang dem Innenquerschnitt der Fensteröffnung 11 angepaßt ist. An der Umfangskante besitzt die Matte 21 einen daran angebrachten, am Rand umlaufenden Gummistreifen 22, der ein nach außen hin offenes, annähernd U-förmiges Profil mit Schenkeln 23 und 24 aufweist, die im montiertem Zustand das Mauerwerk 10 mit den Putzschichten 16 und 17 umfassen. Die beiden Schenkel 23 und 24 sind mittels Schrauben 25 und 26 in Schwerlastdübeln auf der Außen- und Innenseite des Mauerwerkes 10 festgeschraubt. Aus Festigkeitsgründen sind im Bereich der Löcher, durch die die Schrauben 25 und 26 hindurchgesteckt werden, Unterlegscheiben 27 oder Flachstahl mit entsprechenden Bohrungen einvulkanisiert.

Die Matte 21 besitzt ein Füllventil 28, durch das Druckluft in den Hohlraum 29 zum Aufblasen der Matte eingefüllt werden kann.

Die Matte 21 besitzt eine Profilierung 30; im Bereich dieser Profilierung 30 sind quer durch den Hohlraum 29 hindurchgezogene Stützelemente 31 angebracht, die auch in senkrecht dazu verlaufender Richtung eingesetzt sein können (siehe Fig. 2), wodurch sich zwischen den Stützelementen 31 ballonartig aufgeblasene, frei verformbare Teilbereiche 32 bilden. Zur Versteifung gegen zu starke Verformung bei zu hohem Wasserdruck ist angenähert in der Mitte, in horizontaler Richtung verlaufend ein T-förmiges Flachprofil 33 aus Metall (z.B. aus feuerverzinktem Stahl) einvulkanisiert.

Die als aufblasbare, rechteckige, flache und reißfeste Matte 21 mit einer Dicke ausgebildet ist, die der Wandstärke des Mauerwerks 10 entspricht, wird in die Maueröffnung 11 bzw. Fensteröffnung 11 dann eingesetzt, wenn Hochwasser droht. Dabei ist die Matte selbst noch nicht aufgeblasen, sondern wird erst im montiertem Zustand, wenn die Schrauben 25 und 26 festgezogen sind, aufgeblasen. Beim Aufblasen legt sich der Gummistreifen 22 vollflächig und jeden Hohlraum schließend gegen die Innenkanten der Fensteröffnung 11. Wenn der Druck im Inneren der Matte und/oder die Befestigung ausreichend hoch ist, kann der außen anstehende Wasserdruck des Hochwassers die Matte 21 nicht aus der Verankerung herausdrücken.

Bei kleineren Öffnungen kann man das Flachprofil 33 zur Verstärkung weglassen. Dieses Flachprofil kann horizontal, wie in der Fig. 1 bzw. 2 dargestellt, oder gegebenenfalls auch vertikal oder sowohl horizontal als auch vertikal in die Matte einvulkanisiert sein. Es können nicht nur T-Profile, sondern auch U-Profile verwendet werden und es besteht zusätzlich die Möglichkeit, weitere Profile bzw. Versteifungselemente an der Innenseite der montierten Matte 21 mittels der Schrauben 26 horizontal oder vertikal zu befestigen.

Es besteht ferner die Möglichkeit, an die außenbefindlichen Schenkel 23 des U-förmig ausgebildeten Gummistreifens 22 Flachbandmaterial (nicht näher dargestellt) anzuvulkanisieren. Dadurch ist die Matte von vornherein mit einem starren Rahmen versehen, der im montiertem Zustand an der Außenfläche der Mauer anliegt und dann in gleicher Weise wie die Schenkel 23 mittels Schrauben 25 an der Mauer befestigt werden kann. Dadurch wird die Montage noch weiter erleichtert und die Verankerung im Mauerwerk zusätzlich verbessert; gegebenenfalls ist dann ein Versteifungsprofil, wie das Flachprofil 33, nicht mehr erforderlich. Die Matte mit dem Flachband würde dann, wie in Fig. 2 dargestellt, aussehen; das Flachband wird dann zu einem Rahmen 34 zusammengebaut, der die Matte umgibt und mit den außenbefindlichen Schenkeln 23 zusammenvulkanisiert ist.

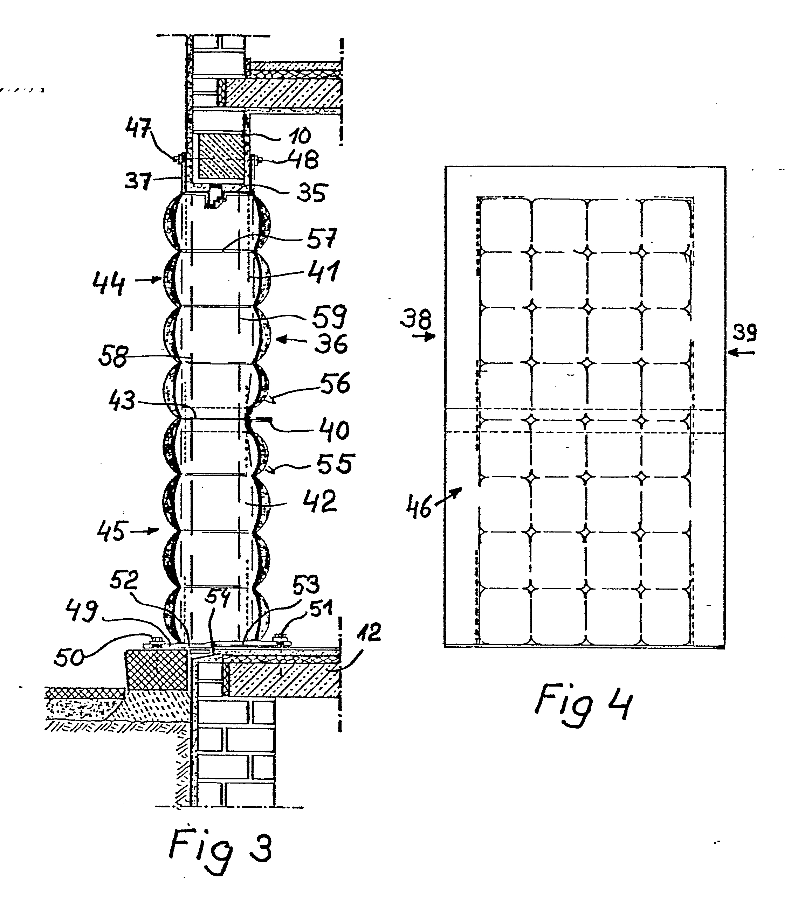

Eine weitere Ausgestaltung der Erfindung ist den Fig. 3 und 4 zu entnehmen.

In das Mauerwerk 10 ist eine Türöffnung 35 eingebracht, die nach unten praktisch am Fußboden 12 endet. In die Türöffnung 35 ist eine Matte 36 eingesetzt, die im Prinzip der Matte 21 entspricht, nur entsprechend der größeren Türöffnung 35 vergrößert ausgebildet ist. Sie besitzt an ihrer oberen Kante und den beiden Seitenkanten dem Gummistreifen 22 entsprechenden Gummistreifen 37,38 und 39 sowie im mittleren Bereich eine horizontal verlaufende, aus T-Profil gebildete Versteifungsverstrebung 40. Diese Versteifungsverstrebung 40 befindet sich im Bereich einer die Matte 36 in zwei Hohlräume 41 und 42 unterteilende horizontal verlaufende Trennwand 43; zusätzlich besteht die Möglichkeit, die Matte 36 in zwei Abschnitte zu unterteilen, die getrennt voneinander montierbar und die im Bereich der Trennwand geteilt sind. Auf diese Weise würde eine obere Teilmatte 44, die auch lichtdurchlässig ausgebildet sein kann, und eine untere Teilmatte 45 gebildet, wodurch die Matten bei entsprechender Wasserhöhe abschnittsweise eingesetzt werden könnten. Dann allerdings ist erforderlich (nicht weiter dargestellt), daß die Matten im Bereich der Trennwand 43 mittels eines daran einvulkanisierten Verbindungsprofiles miteinander verbunden werden.

In gleicher Weise wie bei der Ausführung gemäß Fig. 1 können die Außenschenkel bzw. die außenbefindlichen Schenkel des U-förmigen Gummiprofils mit einem Flachband versehen sein, wodurch eine erhöhte Versteifung und Verstärkung der Matte 36 erzielt wird. Das Flachbandmaterial wird dann den Abmessungen der Türöffnung 35 entsprechend einen Rahmen 46 bilden, wie er in Fig. 4 angedeutet ist. Dieser Rahmen 46 ist in seinen Abmessungen der Türöffnung 35 angepaßt. Die Befestigung der Matte 36 gegebenenfalls mit dem Rahmen 46 aus Flachband erfolgt durch Schraubenverbindungen 47 und 48 im Bereich der Türöffnung 35 mittels Dübeln am Mauerwerk 10. Im Bereich des Bodens 12 ist an dem unteren Abschnitt der Matte 36 bzw. des unteren Mattenteils 45 eine quer zur Flächenerstreckung der Matte 36 verlaufende, aus steifem Gummi- oder Kunststoffmaterial gebildete Querlasche 49 angebracht, die mit Flachprofil beidseitig die äußere Mattenfläche überragt und die mittels einer Schraubenverbindung 50 bzw. 51 am Boden befestigt werden kann. Die Querlasche 49 ist zweckmäßigerweise aus einem im gewissen Umfang elastischem Material hergestellt, damit sich diese Querlasche 49 an Unebenheiten im Bereich der Türöffnung 35 anpassen kann. Die Fig. 3 zeigt dabei noch eine spezielle Ausführung. Man erkennt zwei Querlaschenteile 52,53, die durch einen Schlitz 54 voneinander getrennt sind und jeweils gesondert an der Matte 36 befestigt sind. Aufgrund der voneinander getrennten Querlaschenteile 52 und 53 ist eine noch bessere Anpassung an Bodenunebenheiten möglich. Man sieht in der Darstellung gemäß Fig.3, daß das außenbefindliche Laschenteil 52 tiefer liegt als das innen befindliche Laschenteil 53. Wenn die Querlasche 49 bzw. die Querlaschenteile 52 und 53 aus Metall hergestellt sind, dann werden sie in die Mitte einvulkanisiert. Es besteht auch die Möglichkeit, den Rahmen 46, die Querlasche 49 bzw. die Querlaschenteile 52,53 aus einem Winkelprofil (nicht dargestellt) herzustellen. Auch ist der Hohlraum 42 nach unten zum Schlitz 54 hin abgedichtet.

Jeder der beiden Hohlräume 41 und 42 wird mittels eines eigenen Füllventils 55 und 56 mit Druckluft angefüllt.

In gleicher Weise wie bei der Ausführung nach Fig. 1 können Querversteifungen 57 im Inneren der Matte 36 vorgesehen sein, die horizontal und/oder vertikal angeordnet sind. Es können auch Seile im Inneren der Hohlräume 41,42 vorgesehen sein, die zur Aufnahme des Wasserdrucks dienen. Diese Seile sind in Fig. 3 mit gestrichelten Linien 58 und 59 bezeichnet und am Flachprofil befestigt.

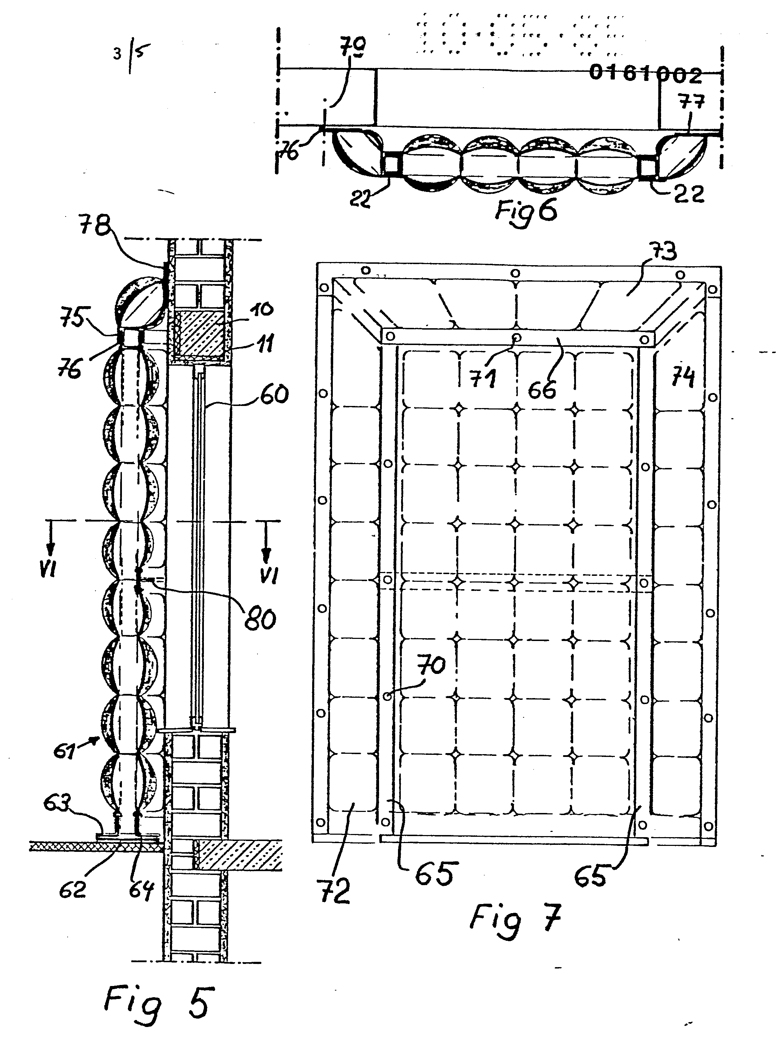

Man erkennt in dem in Fig. 5 dargestellten Ausführungsbeispiel im Schnitt wieder die Mauerwand 10 mit einer Fensteröffnung 11. In dieser Fensteröffnung 11 ist ein Fenster 60 eingesetzt; wie dieses Fenster eingesetzt ist, ist für die Erfindung nicht von Bedeutung. Vor der Mauer 10 wird erfindungsgemäß eine Matte 61 angebracht, die an einem Stahlgerüst befestigt ist.

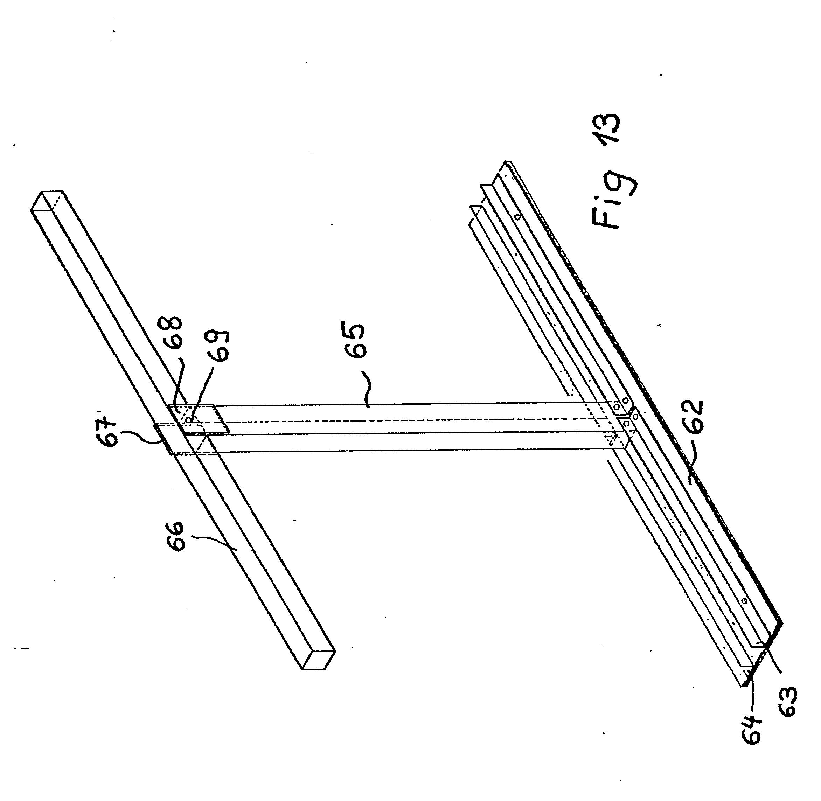

Ein Stahlgerüst ist in perspektivischer Darstellung Fig. 13 zu entnehmen. Das Gerüst besitzt eine relativ starre Bodenplatte 62, z.B. aus Kunststoff, auf deren Oberseite in geeignetem Abstand voneinander L-förmige Profilstäbe 63 und 64 befestigt sind. In der Mitte zwischen den beiden Profilstäben 63 und 64, die dort auch geteilt sein können, ist ein senkrecht dazu verlaufendes Rohrprofil 65 an ihnen befestigt, an dessen oberen freien Ende ein senkrecht dazu und parallel zur Platte 62 verlaufender Querträger 66 befestigt ist. Zur Befestigung dieses Querträgers 66 sind am Rohrprofil 65 beidseitig Laschen 67 und 68 angeschweißt oder auf andere Weise befestigt, die den Querträger 66 zwischen sich nehmen und an denen der Querträger 66 z.B. mittels einer Schraubenverbindung 69 befestigt ist.

Das in Fig. 13 gezeigte Gerüst muß für die Anordnung gemäß Fig. 5 bis 7 abgewandelt werden. Vorhanden bei der Anordnung bei der Fig. 5 bis 7 ist die Bodenplatte 62, die beiden L-förmigen Profilstäbe 63 und 64 sowie zwei senkrecht an beiden Enden der Profilstäbe 63 und 64 befestigte Rohrprofile 65 und ein Querträger 66, der die freien Enden der Rohrprofile 65 verbindet (hier werden für gleichwirkende Teile gleiche Bezugsziffern verwendet). An den beiden L-förmigen Profilstäben 63 und 64 ist die Matte 61 befestigt. An den senkrecht verlaufenden Seitenkanten sind den Gummistreifen 22 gemäß Fig. 1 und 2 entsprechend U-förmige Gummistreifen 22 angeformt bzw. befestigt, die auch die gleichen Bezugsziffern aufweisen. Diese beiden Gummistreifen umgeben bzw. umschließen die Rohrprofile 65. An der oberen Kante umfaßt ein Gummistreifen den Querträger 66. Die Gummistreifen sind mittels Schraubenverbindungen 70 und 71 an den Rohrprofilen 65 bzw. am Querträger 66 fest verbunden.

An der oberen Kante und den Seitenkanten sind zusätzliche Abdichtelemente 72, 73 und 74 befestigt. Diese Abdichtelemente 72, 73, 74 können aus dem gleichen Material wie die Matte 61 hergestellt sein und sind vorzugsweise auch aufblasbar. Sie sind U-förmig angeordnet und umgeben mit ihrer Innenkante den Rahmen aus den Profilstäben 65 und dem Querträger 66; sie besitzen an dieser Innenkante dem Gummistreifen 22 entsprechende Gummistreifen 75 und umschließen damit das Rohrprofil 65 und können gegebenenfalls auch - je nach Montageart - den Gummistreifen 22 beidseitig von außen umfassen. Die Verbindung zwischen den Abdichtelementen 72,73 und 74 mit dem aus den Rohrprofilen 65 und dem Querträger 66 bestehenden Rahmen erfolgt mittels der Schraubverbindungen 70 und 71. Die Außenkanten der Abdichtelemente 72,73 und 74 tragen je eine Befestigungslasche 76 und 77 bzw. 78, mittels der die Abdichtelemente 72,73,74 an der Außenfläche des Mauerwerks 10 mittels Schraubenverbindungen 79 befestigt werden können. Wenn die untere Bodenplatte 62 am Boden befestigt ist und ferner die Abdichtelemente 72,73 und 74 sowohl am Boden als auch am Mauerwerk befestigt sind, ist das Fenster 60 gegen ein Eindringen von Wasser optimal geschützt. Man erkennt in Fig. 5, daß zur Versteifung der Matte 61 annähernd in deren mittlerem Bereich ein T-Profil 80 horizontal verlaufend einvulkanisiert ist. Natürlich können auch entsprechende vertikal verlaufende T-Profile oder auch - wie in der Ausführung gemäß Fig. 3 - Seile vorgesehen sein. Die Matte 61 bzw. die Abdichtelemente 72,73 und 74 können im übrigen identisch der Matte 36 ausgebildet sein.

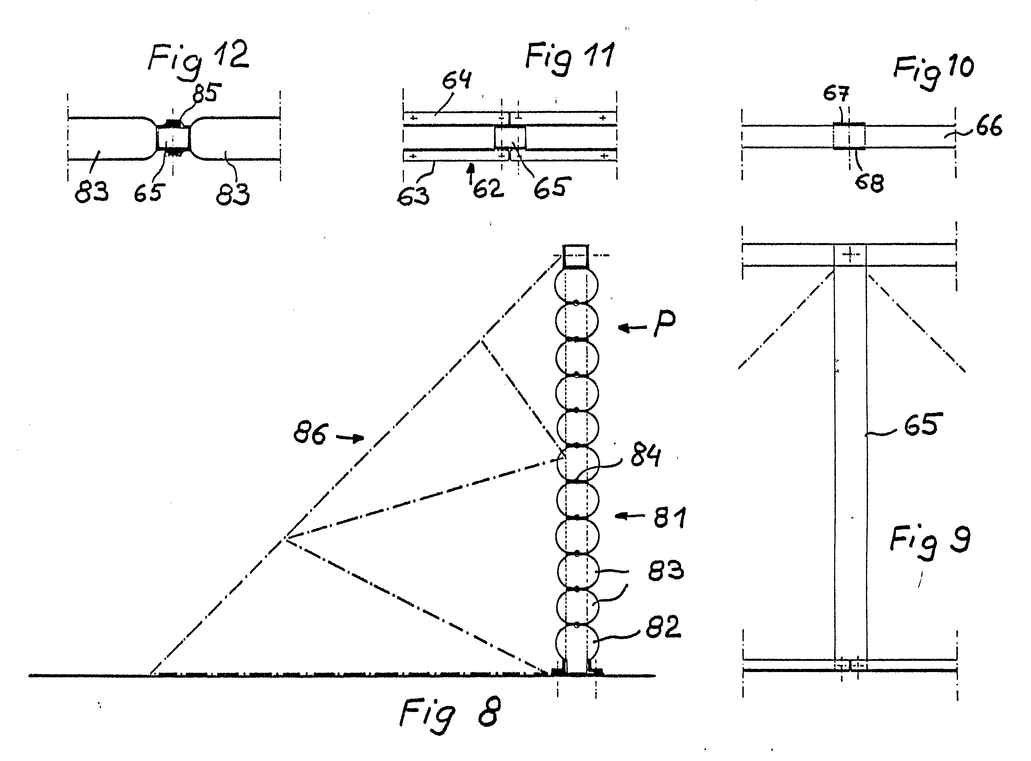

In Fig. 8 ist ein Ausführungsbeispiel dargestellt, das - basierend auf dem Gedanken der Fig. 5 - eine Matte 81 zeigt, die zur Abdichtung bzw. zum Schutz von relativ großen Geländefronten eingesetzt werden kann. Dabei besteht die Matte 81 aus einzelnen Mattenteilen 82 bzw. 83, die untereinander mittels Verbindungselementen 84 miteinander verbunden sind und senkrecht übereinander an einem Rahmen befestigt sind, wie er in Fig. 13 dargestellt ist. Dieser Rahmen kann praktisch auch für die Ausführung der Fig. 5 Verwendung finden, sofern man beispielsweise bei der Ausführung nach Fig. 13 den rechts von dem Rohrteil 65 befindlichen Teil der Bodenplatte 62 und der Profile 63 und 64 sowie des Querträgers 66 wegläßt. Wenn man größere Bereiche gegen das Eindringen von Hochwasser schützen möchte, dann ist ein Gerüst, ähnlich dem in Fig. 13 gezeigten, vorgesehen, wobei allerdings nicht nur ein Rohrprofil 65, sondern mehrere Rohrprofile 65 in einer Reihe und im Abstand voneinander an einer Bodenplatte 62, befestigt sind, deren gegebenenfalls zusammengesetzte Länge der Länge des zu schützenden Bereiches entspricht. Die einzelnen Mattenteile 82 und 83 sind langgestreckte, schlauch- bzw. wurstartige Elemente, die im Bereich der Rohrprofile 65 mit Gummistreifen 85 versehen sind, die die Profile 65 beidseitig umfassen, und mit denen die einzelnen Mattenteile 82 und 83 mit den Rohrprofilen 65 verschraubt bzw. an ihnen anders befestigt sind. Zur Versteifung kann ein Zusatzgerüst 86 vorgesehen werden, mit dem ein Wasserdruck in Pfeilrichtung D (Fig.8) abgefangen werden kann. Die Fig. 10 und 11 zeigen spezielle Einzelteile. Fig. 10 zeigt die Befestigung eines Querträgers 66 zwischen den Laschen 67 und 68 im Stecksystem, Fig. 11 zeigt die Halterung der beiden L-förmigen Profilstäbe 63 und 64 auf der Bodenplatte 62 im Bereich eines Rohrprofils 65. Die einzelnen Mattenteile 82 und 83 werden gegebenenfalls einzeln aufgeblasen.

Um eine optimale Befestigung einer Matte am Boden zu gewährleisten, können - nicht gezeigt - im Boden geeignete Formstücke mit Verbindungsteilen einbetoniert sein, die gewährleisten sollen, daß bei Hochwasser die Rohrprofile 65 leicht im Boden verankert werden können.

Mit der Ausführung gemäß Fig. 8 können Dämme, Deiche oder Einzelobjekte vor Überflutungen gesichert werden. Selbstverständlich ist es notwendig, schon vor dem Hochwasser vorbereitende Arbeiten durchzuführen. So kann ein Betonfundament als Streifenfundament vorgesehen sein, auf dem z.B. eine Bodenplatte 62 befestigt werden kann. Je nach dem zu erwartenden Wasserdruck, der sich nach der zu erwartenden Höhe des Hochwassers errechnen läßt, und somit auch die Festigkeit und damit die Querschnitte der Rahmenkonstruktion bestimmt, sind Ableit- bzw. Versteifungselemente wie die Zusatzgerüste 86 erforderlich. Als solche können Seilverspannungen (auf der Druckseite) oder Fachwerkkonstruktionen auf einer oder beiden Seiten dienen. Statt der oberen Querträger 66 können auch Spannseile vorgesehen sein, die gegebenenfalls mit den Spannseilen benachbarter Rahmen kuppelbar sein können.

10. Mai 1985
Eu 85 393 RZ/fr

Patentansprüche:

1. Vorrichtung (20) zum Schutz von Objekten und Arealen sowie von Öffnungen (11,35) in Wänden (10) vor Hochwasser, d a d u r c h   g e k e n n z e i c h n e t , daß sie mindestens eine Matte (21;36;44,45;61;81) aus reißfestem elastischem Material aufweist, die mittels eines Rahmens (35) am Boden (12) bzw. direkt oder mittels eines Rahmens (35) and den eine Öffnung (11,35) umgebenden Wänden (10) gegebenenfalls auch am Boden durch Befestigungsmittel (25,26;47,48;50,51) fest anordenbar ist.

2. Vorrichtung nach Anspruch 1, dadurch gekennzeichnet, daß die Matte (21;36;44,45;61;81)innen eingelegte und/oder außen aufgebrachte Verstärkungselemente aufweist.

3. Vorrichtung nach Anspruch 1 oder 2, dadurch gekennzeichnet, daß die Matte (21;36;44,45;61,81) mindestens teilweise derart doppelwandig ist, daß mindestens ein aufblasbarer Hohlraum (29;41,42) besteht.

4. Vorrichtung nach einem der Ansprüche 1 bis 3, dadurch gekennzeichnet, daß mindestens Teile des Rahmens in die Matte (21;36;44,45;61;81) einvulkanisiert sind.

5. Vorrichtung nach einem der Ansprüche 1 bis 4, dadurch gekennzeichnet, daß die Matte (21;36;44,45;61;81) am Umfangsrand einen U-förmigen Streifen (22,37,38,39) aufweist, dessen frei nach außen stehende parallele Schenkel einen Abstand voneinander aufweisen, der der Tiefe der zu verschließenden Öffnung (11,35) bzw. der Stärke eines Rahmens (35,65) entspricht und die die Begrenzungswände der Öffnung bzw. den Rahmen innen und außen umgreifen.

6. Vorrichtung nach einem der Ansprüche 3 bis 5, dadurch gekennzeichnet, daß die äußeren, sich gegenüberliegenden Wände der einen Hohlraum (41,42) bildenden Matten durch Verstärkungselemente (31,57) miteinander verbunden sind.

7. Vorrichtung nach Anspruch 6, dadurch gekennzeichnet, daß die Verstärkungselemente (40) als Trennelemente (43) zur Unterteilung des Hohlraums und/oder der Matte dienen.

8. Vorrichtung nach einem der Ansprüche 1 bis 7, dadurch gekennzeichnet, daß die Matte an einer Seitenkante mindestens eine senkrecht zu ihrer Fläche vorspringende Querlasche (49) aufweist.

9. Vorrichtung nach Anspruch 8, dadurch gekennzeichnet, daß die Querlasche (49) aus zwei durch einen Schlitz (54) getrennten, geringfügig gegeneinander bewegbaren Querlaschenteilen (52,53) gebildet ist.

10. Vorrichtung nach Anspruch 8, dadurch gekennzeichnet, daß die Querlasche (49) aus einer beidseitig vorspringenden, elastisch wirkenden separaten Bodenplatte (62) besteht, die mittels auf ihr angeordneten L-förmigen Profilleisten (63,64) dichtend mit der Matte verbindbar ist.

11. Vorrichtung nach einem der Ansprüche 1 bis 10, dadurch gekennzeichnet, daß die Matte aus parallel miteinander und mit einem Rahmen fest verbundenen Hochdruckschläuchen besteht, deren Hohlräume aufblasbar und miteinander verbunden sind, wobei der Rahmen in einem Streifenfundament am Boden verankerbar gestaltet ist.

12. Vorrichtung nach Anspruch 11, dadurch gekennzeichnet, daß der Rahmen eine Bodenplatte (62) aus elastischem Kunststoff aufweist, auf der in Abstand der Mattenstärke zueinander angeordnete L-förmige Profilleisten (3,64) und in geeignetem Abstand zueinander senkrecht verlaufende Profilträger (65) befestigt sind, daß die oberen Enden der Profilträger (65) Querträger (66) haltern, und daß im Inneren der durch Bodenplatte (62), Profilträger (65) und Querträger (66) gebildeten Rechteckform die Mattenteile (82,83) befestigt sind.

13. Vorrichtung nach Anspruch 12, dadurch gekennzeichnet, daß die zu einer Mauer zusammengesetzten Rahmen gegen den Wasserdruck durch Stützen, vorzugsweise demontable Stahlrahmen in Dreieckform, deren Streben über Gelenke mit den Rahmen verbunden sind, gesichert sind.

Fig 1

Fig 2

47
10
48
37
35
57
44
41
59
58
36
43
56
40
55
42
45
52
53
49
54
51
50
12

**Fig 3**

38
39
46

**Fig 4**

10·05·85

0161002

Fig 6

Fig 5

Fig 7

Fig 10

67 68
66

Fig 9

65

Fig 11

64 65
62
63

P
84
81
83
82
86

Fig 8

Fig 12

85
83
65
83

Fig 13